# EUROPÄISCHE PATENTSCHRIFT

(11) **EP 3 976 684 B1**
(45) Veröffentlichungstag und Bekanntmachung des Hinweises auf die Patenterteilung: **12.07.2023**
(21) Anmeldenummer: 20727638.7
(22) Anmeldetag: 25.05.2020
(51) Int. Cl.: C08G 18/48, C08G 18/71, C08G 18/75, C08G 18/10, C08G 18/22, C08G 18/28

(54) **VERFAHREN ZUR HERSTELLUNG EINES GEMISCHTEN SILANTERMINIERTEN POLYMERS**
METHOD FOR PRODUCING A MIXED SILANE-TERMINATED POLYMER
PROCÉDÉ DE PRODUCTION D'UN POLYMÈRE À TERMINAISON SILANE MÉLANGÉ

(30) Priorität: 27.05.2019 EP 19176824
(43) Veröffentlichungstag der Anmeldung: 06.04.2022
(73) Patentinhaber: Covestro Intellectual Property GmbH & Co. KG, 51373 Leverkusen (DE)
(72) Erfinder: STEMPFLE, Florian, Johannes, 50825 Köln (DE); LAAS, Hans-Josef, 51519 Odenthal (DE); THIEBES, Christoph, 51061 Köln (DE)
(74) Vertreter: Levpat
(86) Internationale Anmeldenummer: PCT/EP2020/064380
(87) Internationale Veröffentlichungsnummer: WO 2020/239663

(56) Entgegenhaltungen:
- EP-A1- 3 501 642
- WO-A1-2007/025667
- WO-A1-2016/083309
- AU-A4- 2015 100 195
- CN-A- 107 815 145
- US-A1- 2015 266 995

## Beschreibung

Die vorliegende Erfindung betrifft ein Verfahren zur Herstellung eines gemischten silanterminierten Polymers durch Umsetzung einer Polyolkomponente A) mit einer Diisocyanatkomponente B) umfassend 1-Isocyanato-3,3,5-trimethyl-5-isocyanatomethylcyclohexan (Isophorondiisocyanat), mindestens ein Isocyanatosilan C) und ein Aminosilan E), bei dem die Urethanisierungsreaktion in Gegenwart mindestens eines Katalysators D), der frei von organisch gebundenem Zinn ist, durchgeführt wird. Die Erfindung betrifft weiterhin die Verwendung der so erhaltenen Polymere.

Als silanterminierte Polymere werden allgemein alkoxysilanfunktionelle Polymere, insbesondere alkoxysilanfunktionelle Polyurethane bezeichnet. Derartige Polymere werden beispielsweise als feuchtigkeitshärtende Einkomponenten-Polyurethane in Beschichtungs-, Dichtungs- und Klebemitteln, insbesondere im Bereich des Bauwesens und in der Automobilindustrie, angewendet.

Zur Herstellung silanterminierter Polymere sind unterschiedliche Synthesewege bekannt. Gemäß US 3 627 722 A oder US 3 632 557 A können beispielsweise aminofunktionelle Alkoxysilane mit NCO-haltigen Prepolymeren unter Bildung einer Harnstoffgruppe zu alkoxyfunktionellen Polyurethanen umgesetzt werden. Solche alkoxysilanfunktionellen Polyurethane vernetzen relativ rasch und härten zu nicht-klebrigen Materialen von guter Festigkeit und Dehnbarkeit aus. Allerdings weisen solche Polymere auf Grund der bei der Herstellung gebildeten Harnstoffgruppen eine hohe Viskosität auf, wodurch die Formulierung von Zusammensetzungen mit guter Verarbeitbarkeit deutlich erschwert wird.

Gemäß EP 0 070 475 A2 und US 5 990 257 A besteht ein alternativer Syntheseweg in der Umsetzung von NCO-haltigen Alkoxysilanen mit hydroxyfunktionellen Prepolymeren, wobei die Silangruppe unter Bildung einer Urethangruppe mit dem Polymer verknüpft wird. Als hydroxyfunktionelle Prepolymere können dabei beispielsweise hydroxyfunktionelle Polyurethane, die durch Umsetzung von Diisocyanaten mit Diolen erhalten werden können, oder langkettige Diole, die nicht über eine Reaktion mit Diisocyanaten vorverlängert wurden, verwendet werden (EP 0372561 A2). Ein Nachteil dieses Syntheseweges besteht darin, dass die benötigten NCO-haltigen Alkoxysilane nur beschränkt lagerfähig und oft teuer sind.

Alternativ können durch ein Hybridverfahren, das beide im Vorhergehenden beschriebenen Synthesewege kombiniert, silanterminierter Polymere erhalten werden, die sowohl Silangruppen enthalten, die über Harnstoffgruppen mit dem Polymerrückgrat verbunden sind, als auch solche Silangruppen, die über Urethangruppen mit dem Polymerrückgrat verbunden sind. Diese silanterminierten Polymere werden als "gemischte" silanterminierte Polymere bezeichnet und werden beispielsweise in AU 2015100195 A4 und US 2015/0266995 A1 offenbart.

Bei der Synthese dieser gemischt silanterminierter Polymere aber auch bei der Synthese der NCO-haltigen Prepolymere bzw. der Umsetzung der hydroxyfunktionellen Polymere, werden zur Beschleunigung der NCO/OH-Reaktion Katalysatoren eingesetzt. Dies sind typischerweise Dialkylzinn(IV)verbindungen, wie z.B. Dibutylzinndilaurat oder Dibutylzinnoxid. Es werden aber auch tertiäre Amine und diverse Metallkomplexe z.B. des Titans, Bismuths oder Zirkoniums beschrieben. Auch der Einsatz von β-Diketonat-Verbindungen diverser Nebengruppenmetalle zur Beschleunigung der NCO/OH-Reaktion ist bekannt (DE 10 2004 012 876).

In jüngster Zeit wurden jedoch die am häufigsten verwendeten Zinn-organischen Verbindungen als potentielle Cancerogene beim Menschen erkannt. Sie stellen deshalb unerwünschte Bestandteile dar und sollen aufgrund ihrer toxikologischen Eigenschaften auf längere Sicht substituiert werden.

Ein einfacher Austausch der Zinn-organischen Verbindungen ist jedoch nicht immer möglich, da sich die Wahl des Katalysators oft auch auf die Eigenschaften der alkoxysilanfunktionellen Polyurethane, sowie der daraus hergestellten härtbaren Massen auswirkt. So beschreibt EP 2 625 226 B1 beispielsweise die Reaktion von Isocyanatosilanen mit Polyethern in Gegenwart von Bismuthneodecanoat. Dabei ergeben sich, im Vergleich zu Dibutylzinndilaurat basierten Zusammensetzungen deutlich verkürze Hautbildezeiten. Auch die Viskosität, sowie die Lagerstabilität, der Prepolymere werden durch die Wahl des Katalysators negativ beeinflusst (vgl. EP 1 535 940).

Um sprüh-, roll- oder streichbare Formulierungen zu erhalten, ist in der Regel eine möglichst niedrige Viskosität wünschenswert. Deshalb ist oft der Zusatz von organischen Lösungsmitteln und/oder großer Mengen verdünnend wirkender Weichmacher erforderlich. Große Mengen all dieser Zusätze sind jedoch generell unerwünscht. Zudem können beispielsweise Weichmacher im Laufe der Zeit aus dem Produkt "ausschwitzen", was ebenfalls von Nachteil ist. Um dennoch leicht zu verarbeitende Formulierungen zu erhalten ist, insbesondere bei den Harnstoffgruppen enthaltenden STPs, die von Haus aus eine höhere Viskosität aufweisen, eine möglichst niedrige Viskosität wünschenswert.

Aufgabe der vorliegenden Erfindung war es daher, niedrigviskose gemischt silanterminierter Polymere zur Verfügung zu stellen, bei denen die Umsetzung der Hydroxylgruppen des Polyols mit den Isocyanatgruppen des Diisocyanats bzw. des Isocyanatosilans ohne die Verwendung von Katalysatoren, die organische Zinnverbindungen enthalten, auskommt.

Diese Aufgabe wurde durch ein Verfahren gemäß Anspruch 1 gelöst. Vorteilhafte Weiterbildungen sind in den Unteransprüchen angegeben. Sie können beliebig kombiniert werden, sofern sich aus dem Kontext nicht eindeutig das Gegenteil ergibt. Die Erfindung betrifft weiterhin eine Verwendung gemäß Anspruch 14.

Die vorliegende Erfindung basiert auf der überraschenden Beobachtung, dass durch Wahl geeigneter organo-zinnfreier Katalysatoren gemischt silanterminierte Polymere mit niedriger Viskosität erhalten werden, die sowohl Silangruppen enthalten, die über Harnstoffgruppen mit dem Polymerrückgrat verbunden sind, als auch solche Silangruppen, die über Urethangruppen mit dem Polymerrückgrat verbunden sind.

Erfindungsgemäß vorgeschlagen wird ein Verfahren zur Herstellung eines gemischten silanterminierten Polymers durch Umsetzung einer Polyolkomponente A) mit einer Diisocyanatkomponente B) umfassend 1-Isocyanato-3,3,5-trimethyl-5-isocyanatomethylcyclohexan (Isophorondiisocyanat), mindestens einem Isocyanatosilan C) und einem Aminosilan E), bei dem die Urethanisierungsreaktion in Gegenwart mindestens eines Katalysators D), der frei von organisch gebundenem Zinn ist, durchgeführt wird.

Bei den beim erfindungsgemäßen Verfahren eingesetzten Polyolkomponenten A) handelt es sich um beliebige Polyole, beispielsweise die aus der Polyurethanchemie bekannten polymeren Polyetherpolyole, Polyesterpolyole, Polycarbonatpolyole, Polyurethanpolyole und/oder Polyacrylatpolyole. Diese haben in der Regel eine mittlere Funktionalität von 1,8 bis 6, bevorzugt 1,8 bis 4, besonders bevorzugt von 1,9 bis 2,2. Das zahlenmittlere Molekulargewicht dieser Polyole (nach DIN 55672-1:2016-03 bestimmt) beträgt in der Regel von 3000 bis 24000, vorzugsweise von 5000 bis 16000, besonders bevorzugt von 7000 bis 12000. Es können auch beliebige Gemische solcher Polyole eingesetzt werden.

Üblicherweise weisen die Polyolkomponenten A) OH-Zahlen, bestimmt nach DIN 53240, von mindestens 4,5 mg KOH/mg auf. Vorzugsweise liegt die OH-Zahl im Bereich von 8 bis 30 mg KOH/g, besonders bevorzugt von 8 bis 20 mg KOH/g, am meisten bevorzugt von 9 bis 18 mg KOH/g.

Bevorzugte Polyolkomponenten A) für das erfindungsgemäße Verfahren sind Polyetherpolyole, beispielsweise solche der in der DE 26 22 951 B, Spalte 6, Zeile 65 bis Spalte 7, Zeile 26, der EP-A 0 978 523 Seite 4, Zeile 45 bis Seite 5, Zeile 14 oder der WO 2011/069966, Seite 4, Zeile 20 bis Seite 5, Zeile 23 genannten Art, sofern sie den oben gemachten Angaben hinsichtlich Funktionalität und Molekulargewicht entsprechen. Als Polyolkomponenten A) besonders bevorzugte Polyetherpolyole sind Anlagerungsprodukte von Ethylenoxid und/oder Propylenoxid an 1,2-Propandiol, 1,3-Propandiol, Glycerin, Trimethylolpropan, Ethylendiamin und/oder Pentaerythrit oder die durch Polymerisation von Tetrahydrofuran erhältlichen Polytetramethylenetherglykole des oben genannten Molekulargewichtsbereiches.

Ganz besonders bevorzugte Polyolkomponenten A) sind Polyetherpolyole auf Basis von Polypropylenoxid, wie sie beispielsweise bei der Fa. Covestro Deutschland AG unter dem Handelsnamen Acclaim^{®}, z. B. als Acclaim^{®} 8200 N, kommerziell erhältlich sind.

Die beim erfindungsgemäßen Verfahren eingesetzte Diisocyanatkomponente B) enthält 1-Isocyanato-3,3,5-trimethyl-5-isocyanatomethylcyclohexan (Isophorondiisocyanat, IPDI), welches nach beliebigen Verfahren, z. B. durch Phosgenierung oder auf phosgenfreiem Weg, beispielsweise durch Urethanspaltung, hergestellt werden kann.

Die Diisocyanatkomponente B) kann dabei neben IPDI auch anteilig weitere Diisocyanate enthalten, beispielsweise bis zu 20 mol-% bezogen auf die eingesetzte Menge an IPDI.

Bevorzugte Diisocyanate, die neben IPDI in der Diisocyanatkomponente B) enthalten sein können, sind solche der allgemeinen Formel (I)

**OCN-Y-NCO** **(I)**

in welcher Y für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht.

Geeignet sind beispielsweise z. B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 2,4- und/oder 2,6-hexahydrotolylendiisocyanat (H6-TDI), 1-Isocyanato-1-methyl-4(3)-isocyanatomethylcyclohexan, 2,4'- und 4,4'-Diisocyanatodicyclohexylmethan (H12-MDI), 1,3- und 1,4-Bis(isocyanatomethyl)-cyclohexan, 4,4'-Diisocyanato-3,3'-dimethyldicyclohexylmethan, 4,4'-Diisocyanato-3,3',5,5'-tetra-methyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanatop-menthan, 1,3-Diisocyanatoadamantan, 1,3-Dimethyl-5,7-diisocyanatoadamantan, 1,3- und 1,4-Bis-(isocyanatomethyl)benzol (XDI), 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat (TDI) sowie beliebige Gemische dieser Isomeren, Diphenylmethan-2,4'- und/oder -4,4'-diisocyanat (MDI) und Naphthylen-1,5-diisocyanat (NDI) sowie beliebige Gemische solcher Diisocyanate.

Besonders bevorzugt wird als Diisocyanatkomponente B) ausschließlich IPDI verwendet.

Bei den beim erfindungsgemäßen Verfahren eingesetzten Isocyanatosilane C) handelt es sich um beliebige Verbindungen, in denen gleichzeitig nebeneinander mindestens eine, vorzugsweise genau eine, Isocyanatgruppe und mindestens eine, vorzugsweise genau eine, Silangruppe mit mindestens einem Alkoxysubstituenten vorliegen. Im Folgenden werden die Isocyanatosilane C) auch als Alkoxysilan-funktionelle Isocyanate C) oder als Isocyanatoalkoxysilane C) bezeichnet.

Geeignete Isocyanatoalkoxysilane C) sind beispielsweise Isocyanatoalkylalkoxysilane, wie sie z. B. nach den in US-B 3 494 951, EP-A 0 649 850, WO 2014/063 895 und WO 2016/010 900 beschriebenen Verfahren auf phosgenfreiem Weg durch thermische Spaltung der korrespondierenden Carbamate oder Harnstoffe zugänglich sind.

Gemäß einer weiteren bevorzugten Ausführungsform kommt als Alkoxysilan-funktionelles Isocyanat (Isocyanatosilan) C) mindestens eine Verbindung der allgemeinen Formel (II) 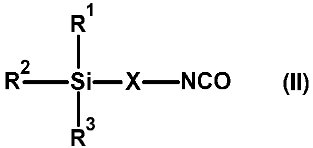 zum Einsatz,
in welcher
- R¹, R² und R³: unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist, und
- X: für einen linearen oder verzweigten organischen Rest mit bis zu 6, vorzugsweise 1 bis 4 Kohlenstoffatomen, besonders bevorzugt für einen Propylenrest (-CH₂-CH₂-CH₂-) steht.

Beispiele für derartige Isocyanatoalkoxysilane sind Isocyanatomethyltrimethoxysilan, (Isocyanatomethyl)methyldimethoxysilan, Isocyanatomethyltriethoxysilan, (Isocyanatomethyl)-methyldi-ethoxysilan, Isocyanatomethyltriisopropoxysilan, 2-Isocyanatoethyl-trimethoxysilan, 2-Isocyanatoethyltriethoxysilan, 2-Isocyanatoethyltriisopropoxysilan, 3-Isocyanatopropyltrimethoxysilan, 3-Isocyanatopropyltriethoxysilan, 3-Isocyanatopropylmethyl-dimethoxysilan, 3-Isocyanatopropylmethyldiethoxysilan, 3-Isocyanatopropylethyldiethoxysilan, 3-Isocyanatopropyldimethylethoxysilan, 3-Isocyanatopropyldiisopropylethoxysilan, 3-Isocyanatopropyltripropoxysilan, 3-Isocyanatopropyltriisopropoxysilan, 3-Isocyanatopropyl-tributoxysilan, 3-Isocyanatopropylmethyldibutoxysilan, 3-Isocyanatopropylphenyldimethoxysilan, 3-Isocyanatopropylphenyldiethoxysilan, 3-Isocyanatopropyltris(methoxyethoxyethoxy)silan, 2-Isocyanatoisopropyltrimethoxysilan, 4-Isocyanatobutyltrimethoxysilan, 4-Isocyanatobutyl-triethoxysilan, 4-Isocyanatobutyltriisopropoxysilane, 4-Isocyanatobutylmethyldimethoxysilan, 4-Isocyanatobutylmethyldiethoxysilan, 4-Isocyanatobutylethyldimethoxysilan, 4-Isocyanatobutyl-ethyldiethoxysilan, 4-Isocyanatobutyldimethylmethoxysilan, 4-Isocyanatobutylphenyldimethoxy-silan, 4-Isocyanatobutylphenyldiethoxysilan, 4-Isocyanato(3-methylbutyl)trimethoxysilan, 4-Isocyanato(3-methylbutyl)triethoxysilan, 4-Isocyanato-(3-methylbutyl)methyldimethoxysilan, 4-Isocyanato(3-methylbutyl)methyldiethoxysilan und 11-Isocyanatoundecyltrimethoxysilan oder beliebige Gemische solcher Isocyanatoalkoxysilane.

Bevorzugte Isocyanatosilane C) sind insbesondere Isocyanatomethyltrimethoxysilan, Isocyanatomethyltriethoxysilan, (Isocyanatomethyl)methyldimethoxysilan, (Isocyanatomethyl)-methyldi-ethoxysilan, 3-Isocyanatopropyltrimethoxysilan, 3-Isocyanatopropylmethyldimethoxysilan, 3-Isocyanatopropyltriethoxysilan und 3-Isocyanatopropylmethyldiethoxysilan. Besonders bevorzugt ist die Verwendung von 3-Isocyanatopropyltrimethoxysilan

Die beim erfindungsgemäßen Verfahren eingesetzten Stoffmengen an IPDI enthaltenden Diisocyanatkomponente B) und Isocyanatosilan C) richten sich nach der Stoffmenge an Hydroxylgruppen der Polyolkomponente A) und dem gewünschten Verhältnis von Isocyanatosilan C) zu IPDI enthaltender Diisocyanatkomponente B). Die gesamte Stoffmenge von Isocyanatosilan C) und IPDI enthaltender Diisocyanatkomponente B) wird vorzugsweise so gewählt, dass im erfindungsgemäßen Verfahrensprodukt die Hydroxylgruppen des Polyols vollständig zu Urethangruppen umgesetzt vorliegen.

Um das erfindungsgemäße Verfahren möglichst kostengünstig zu gestalten, ist es vorteilhaft, den Anteil von Isocyanatosilan C) möglichst gering zu halten. Vorzugsweise beträgt die Stoffmenge des eingesetzten Isocyanatosilans C) deshalb maximal 50 mol-% bezogen auf die Anzahl der Hydroxylgruppen der Polyolkomponente A). Im Allgemeinen liegt die Stoffmenge des eingesetzten Isocyanatosilans C) beim erfindungsgemäßen Verfahren im Bereich von 1 bis 50 mol-%, bevorzugt im Bereich von 5 bis 28 mol-%, besonders bevorzugt im Bereich von 10 bis 28 mol-%, ganz besonders bevorzugt im Bereich von 10 bis 25 mol-%, jeweils bezogen auf die Anzahl der Hydroxylgruppen des Polyols A).

Abhängig von der gewählten Stoffmenge an Isocyanatosilan C) kommt die IPDI enthaltende Diisocyanatkomponente B) beim erfindungsgemäßen Verfahren im Allgemeinen in einer Stoffmenge von 50 bis 99 mol-%, bevorzugt von 72 bis 95 mol-%, besonders bevorzugt von 72 bis 90 mol-%, ganz besonders bevorzugt in einer Stoffmenge von 75 bis 90 mol-%, jeweils bezogen auf die Anzahl der Hydroxylgruppen des Polyols A), zum Einsatz.

Die Umsetzung der Polyolkomponente A) mit der IPDI enthaltenden Diisocyanatkomponente B) und dem Isocyanatosilan C) erfolgt in Anwesenheit eines Katalysators D), der frei von organisch gebundenem Zinn ist. Dass die Katalysatorkomponente frei von organischen Zinnverbindungen ist, wird im Rahmen der vorliegenden Erfindung derart definiert, dass der Gehalt an organischen Zinnverbindungen in der zum Polyurethan führenden Reaktionsmischung und somit auch im erhaltenen Polyurethan ≤ 0.06 Gewichts-% und vorzugsweise ≤ 0.01 Gewichts-%, bezogen auf das Gesamtgewicht des Alkoxysilangruppen enthaltenden Polyurethans, beträgt.

Die quantitiative Bestimmung des Gehalts an organischen Zinnverbindungen erfolgt durch Extraktion der Probe (optional) mit n-Hexan, Derivatisierung (optional) mit Natriumtetraethylborat und Gaschromatographie, wobei eine Detektion mittels Atomemission bevorzugt ist. Details finden sich beispielsweise in der Dissertation "Bestimmung von Organozinnverbindungen in Sedimenten mittels GC-AED - Entwicklung von Extraktions- und Derivatisierungsmethoden" von Almut Liebich, Technische Universität Berlin 2005 (http://dx.doi.org/10.14279/depositonce-1164).

Insbesondere werden dann keine organozinnbasierten Katalysatoren wie DBTL (Dibutylzinndilaurat) in der Reaktion eingesetzt. Generell lassen sich als organische Zinnverbindungen alle Verbindungen definieren, in denen eine kovalente Sn-C-Bindung vorliegt.

Ebenso ist mit eingeschlossen, dass aus etwaigen Vorstufen wie Polyurethan-Prepolymeren keine organischen Zinn-Katalysatorrückstande in die Reaktionsmischung für das erfindungsgemäße Verfahren eingeschleppt werden.

Der Katalysator D) ist ausgewählt aus:
- einer organometallischen Verbindung, vorzugsweise einer beta-Diketonat-Verbindung, von Magnesium, Zink, Gallium, Scandium, Lanthan, Cer, Praseodym, Neodym, Promethium, Samarium, Europium, Gadolinium, Terbium, Dysprosium, Holmium, Erbium, Thulium, Ytterbium, Yttrium oder Lutetium,
- einem Zinkcarboxylat
- oder deren Mischungen.

Der Begriff organometallischen Verbindung bezeichnet im Rahmen der Erfindung eine Verbindung, welche zumindest einen über ein Sauerstoffatom an vorstehend genannte Metalle (Me) gebundenen Liganden aufweist. Erfindungsgemäß geeignete Verbindungen dieser Art weisen Liganden auf, welche ausgewählt sind aus der Gruppe bestehend aus Alkoxygruppe, Sulfonatgruppe, Carboxylatgruppe, Dialkylphosphatgruppe, Dialkylpyrophosphatgruppe und beta-Diketonatgruppe, wobei alle Liganden identisch oder verschieden voneinander sein können.

Bezüglich der Verwendung von Ytterbium (III)-Acetylacetonat, einer beta-Diketonat-Verbindung, gibt es Einschränkungen, die weiter unten beschrieben werden (siehe Beschreibung der (3-Diketonat-Verbindungen).

Als Alkoxygruppen haben sich insbesondere so genannte Neoalkoxy-Substituenten, insbesondere der Formel (III), als besonders geeignet erwiesen.

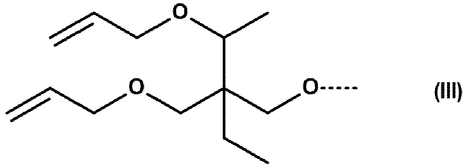

Als Sulfonsäuren haben sich insbesondere aromatische Sulfonsäuren, deren Aromaten mit einer Alkylgruppe substituiert sind, als besonders geeignet erwiesen. Als bevorzugte Sulfonsäuren gelten Reste der Formel (IV).

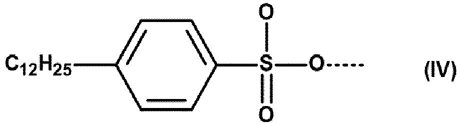

Besonders geeignet als Carboxylatgruppen haben sich insbesondere Carboxylate von Fettsäuren erwiesen. Als bevorzugtes Carboxylat gelten Decanoat, Stearat und Isostearat.

Insbesondere weist der Katalysator mindestens einen mehrzähnigen Liganden, auch Chelatligand genannt, auf. Insbesondere ist der mehrzähnige Ligand ein zweizähniger Ligand.

Vorzugsweise handelt es sich beim zweizähnigen Liganden um einen Liganden der Formel (V)

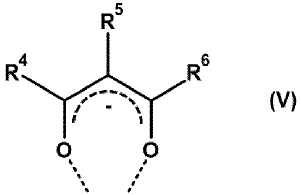

Dabei steht der Rest R⁴ für ein Wasserstoffatom oder für eine lineare oder verzweigte Alkylgruppe mit 1 bis 8 C-Atomen, insbesondere für eine Methylgruppe. Der Rest R⁵ steht für ein Wasserstoffatom oder für eine lineare oder verzweigte Alkylgruppe mit 1 bis 8 C-Atomen, welche gegebenenfalls Heteroatome aufweist, insbesondere für ein Wasserstoffatom.

Der Rest R⁶ steht für ein Wasserstoffatom oder für eine Alkylgruppe mit 1 bis 8, insbesondere mit 1 bis 3, C-Atomen oder für eine lineare oder verzweigte Alkoxygruppe mit 1 bis 8, insbesondere mit 1 bis 3, C-Atomen.

Bevorzugt handelt es sich bei dem Katalysator D) um eine Verbindung der Formel (VI).

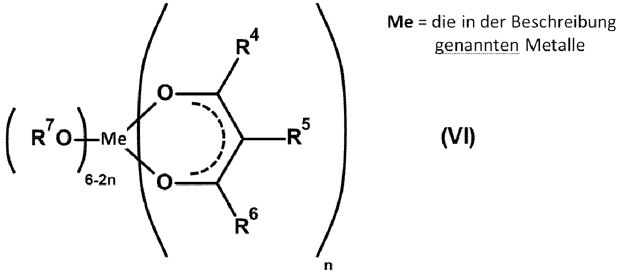

Die Reste R⁴, R⁵ und R⁶ wurden bereits vorhergehend beschrieben. Der Rest R⁷ steht für einen linearen oder verzweigten Alkylrest mit 2 bis 20 C-Atomen, insbesondere für einen Isobutyl- oder für einen Isopropylrest. n steht für einen Wert von 1 oder 2, insbesondere für 2.

Bevorzugt sind metallorganische Verbindungen der Formel (VI), wobei der Rest R⁴ für eine Methylgruppe, der Rest R⁵ für ein Wasserstoffatom, der Rest R⁶ für eine Methylgruppe oder Methoxy- oder Ethoxygruppe und der Rest R⁷ für einen Isobutyl- oder für einen Isopropylrest steht.

Die bevorzugten beta-Diketonat-Verbindung basieren auf den genannten Metallen bevorzugt in ihren Hauptoxidationsstufen +III bzw. +IV (sofern vorhanden). Besonders bevorzugt sind β-Diketonat-Verbindungen basierend auf Yb(III) und/oder Ga(III).

Unter β-Diketonat-Verbindungen von Magnesium, Zink, Gallium, Scandium, Lanthan, Cer, Praseodym, Neodym, Promethium, Samarium, Europium, Gadolinium, Terbium, Dysprosium, Holmium, Erbium, Thulium, Ytterbium, Yttrium oder Lutetium werden alle Verbindungen dieser Metalle verstanden, die wenigstens einen Liganden oder Substituenten aufweisen, der durch Anionenbildung von einem β-Diketon, bevorzugt durch Deprotonierung, abgeleitet ist und folglich eine oder mehrere Struktureinheit der Formel (VII) aufweist.

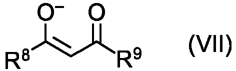

R⁸, R⁹ stehen dabei unabhängig voneinander für gleiche oder verschiedene gegebenenfalls heteroatomhaltige organische Reste mit bevorzugt jeweils 1-20, besonders bevorzugt 1-10 Kohlenstoffatomen.

Bevorzugt weisen die eingesetzten β-Diketonat-Verbindungen ausschließlich Liganden bzw. Substituenten des β-Diketonat-Typs auf.

Das erfindungsgemäße Verfahren kann auf unterschiedliche Weisen durchgeführt. Diese sind weiter unten beschrieben und als "Verfahren A", "Verfahren B" und "Verfahren C" gekennzeichnet. In Verfahren C wird als bevorzugtes β-Diketonat Acetylaceton ('acac') eingesetzt. Ganz besonders bevorzugt ist dabei die Verwendung von Yb(acac)₃ und/oder Ga(acac)₃. In den Verfahren A und B ist die alleinige Verwendung von Yb(acac)₃ ausgenommen. Die Verwendung von Yb(acac)₃ in Mischung mit anderen erfindungsgemäßen Katalysatoren ist möglich. Bevorzugt ist in Verfahren A und B die Verwendung von Ga(acac)₃ oder einer Mischung von Yb(acac)₃ mit anderen erfindungsgemäßen Katalysatoren, beispielsweise von Yb(acac)₃ mit Ga(acac)₃.

Geeignete Zinkcarboxylate sind insbesondere solche, die Ringstruktur im organischen Rest aufweisen. Bevorzugt werden aliphatische Zink-Carboxylate als Katalysatoren D) verwendet. Beispiele sind solche, deren Carbonsäurereste eine Kohlenstoffkette von 20 oder weniger, bevorzugt 18, besonders bevorzugt kleiner gleich 12 oder weniger Kohlenstoffatomen aufweisen. Besonders bevorzugt sind Zink-2-Ethylhexanoat (auch Zink-Octanoat genannt), Zink-n-Octanoat, Zink-n-Decanoat, Zink-Neodecanoat, Zink-Ricinoleat und Zink-Stearat.

Ferner ist es ebenso möglich, dass die erfindungsgemäßen Katalysatoren D) Kristallwasser enthalten.

Die Katalysatoren D) können einzeln oder in Form beliebiger Mischungen untereinander eingesetzt werden und kommen dabei beispielsweise in Mengen von 0,001 bis 1 Gew.-%, bevorzugt 0,01 bis 0,5 Gew.-%, berechnet als Gesamtgewicht an eingesetzten Katalysatoren bezogen auf das Gesamtgewicht der Reaktionspartner A), B) und C), zum Einsatz.

Geeignete Aminosilane E) sind beispielsweise Aminosilane, der allgemeinen Formel (VIII) 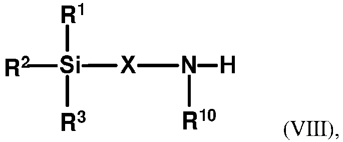 in welcher
R¹, R², R³ und X die für Formel (II) genannte Bedeutung haben
und
- R¹⁰: für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 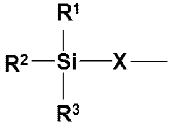 steht, in welchem R¹, R², R³ und X die vorstehend angegebene Bedeutung haben.

Geeignete Aminosilane der allgemeinen Formel (VIII) sind beispielsweise 3-Aminopropyltrimethoxysilan, 3-Amino-propyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3-Aminopropyltripropoxysilan, 3-Aminopropyltributoxysilan, 3-Aminopropylphenyldiethoxysilan, 3-Aminopropylphenyldimethoxysilan, 3-Aminopropyltris-(methoxyethoxyethoxy)silan, 2-Aminoisopropyltrimethoxysilan, 4-Aminobutyltrimethoxysilan, 4-Aminobutyltriethoxysilan, 4-Aminobutylmethyldimethoxysilan, 4-Aminobutylmethyldiethoxysilan, 4-Aminobutylethyldimethoxysilan, 4-Aminobutylethyldiethoxysilan, 4-Aminobutyldimethylmethoxysilan, 4-Aminobutylphenyldimethoxysilan, 4-Aminobutylphenyldiethoxysilan, 4-Amino-(3-methylbutyl)methyldimethoxysilan, 4-Amino(3-methylbutyl)methyldiethoxysilan, 4-Amino(3-methylbutyl)trimethoxysilan, 3-Aminopropylphenylmethyl-n-propoxysilan, 3-Aminopropylmethyldibutoxysilan, 3-Aminopropyldiethylmethylsilan, 3-Aminopropylmethylbis(trimethylsiloxy)silan, 11-Aminoundecyltrimethoxysilan, N-Methyl-3-aminopropyltrimethoxysilan, N-Methyl-3-amino-propyltriethoxysilan, N-(n-Butyl)-3-aminopropyltrimethoxysilan, N-(n-Butyl)-3-aminopropyltriethoxysilan, N-(2-Aminoethyl)-3-aminopropyltrimethoxysilan, N-(2-Aminoethyl)-3-aminoisobutylmethyldimethoxysilan, N-(2-Aminoethyl)-3-aminopropylmethyldimethoxysilan, N-(2-Aminoethyl)-3-aminopropyltris(2-ethylhexoxy)silan, N-(6-Aminohexyl)-3-aminopropyltrimethoxysilan, N-Benzyl-N-(2-aminoethyl)-3-aminopropyltrimethoxysilan, Bis(3-trimethoxysilylpropyl)amin, Bis(3-triethoxysilylpropyl)amin, (Aminoethylaminomethyl)-phenethyltrimethoxysilan, 3-Ureidopropyltriethoxysilan, 3-(m-Aminophenoxy)-propyltrimethoxysilan, m- und/oder p-Aminophenyltrimethoxysilan, 3-(3-Aminopropoxy)-3,3-dimethyl-1-propenyltrimethoxysilan, 3-Aminopropylmethylbis(trimethylsiloxy)-silan, 3-Aminopropyltris(trimethyl-siloxy)silan, 3-Aminopropylpentamethyldisiloxan oder beliebige Gemische solcher Aminosilane.

Bevorzugte Aminosilane der allgemeinen Formel (VIII), sind solche, in welcher
- R¹, R² und R³: jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste R¹, R² und R³ für einen solchen Alkoxyrest steht,
- X: für einen linearen oder verzweigten Alkylenrest mit 3 oder 4 Kohlenstoffatomen steht, und
- R¹⁰: für einen gesättigten, linearen oder verzweigten, aliphatischen oder cycloaliphatischen Rest mit bis zu 6 Kohlenstoffatomen oder einen Rest der Formel 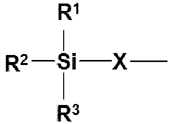 steht, in welchem R¹, R², R³ und X die vorstehend angegebene Bedeutung haben.

Besonders bevorzugte Aminosilane der allgemeinen Formel (VIII) sind solche, in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R¹⁰: für einen linearen Alkylrest mit bis zu 4 Kohlenstoffatomen oder einen Rest der Formel 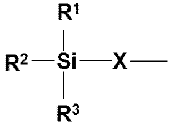 steht, in welchem R¹, R², R³ und X die vorstehend angegebene Bedeutung haben.

Ganz besonders bevorzugte Aminosilane der allgemeinen Formel (VIII) sind N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, Bis(3-trimethoxysilylpropyl)-amin und/oder Bis(3-triethoxysilylpropyl)amin.

Geeignete Aminosilane E) sind beispielsweise auch solche der allgemeinen Formel (IX) 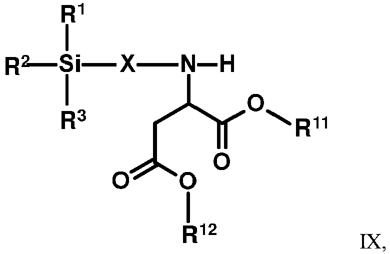 in welcher R¹, R² und R³ die für Formel (II) genannte Bedeutung haben,
- X: für einen linearen oder verzweigten organischen Rest mit mindestens 2 Kohlenstoffatomen steht und
- R¹¹ und R¹²: unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

Bei diesen Aminosilanen der allgemeinen Formel (IX) handelt es sich um die silanfunktionellen Asparaginsäureester, die nach der Lehre der EP-A 0 596 360 durch Umsetzung von primäre Aminogruppen tragenden Aminosilanen mit Fumarsäureestern und/oder Maleinsäureestern erhältlich sind.

Geeignete Ausgangsverbindungen zu Herstellung von Aminosilanen der allgemeinen Formel (IX) sind daher grundsätzlich beliebige Aminosilane der allgemeinen Formel (X) 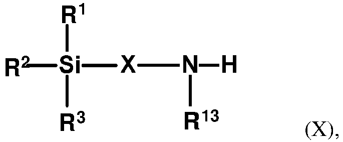 in welcher R¹, R², R³ und X die für Formel (II) genannte Bedeutung haben und R¹³ für Wasserstoff steht.

Diese werden mit Fumarsäurediestern und/oder Maleinsäurediestern der allgemeinen Formel (XI) 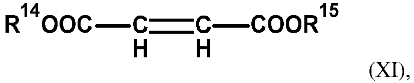 umgesetzt, in welcher die Reste R¹⁴ und R¹⁵ für gleiche oder verschiedene Reste stehen und organische Reste mit 1 bis 18, vorzugsweise 1 bis 9, besonders bevorzugt 1 bis 4, Kohlenstoffatomen bedeuten.

Bevorzugte Aminosilane der allgemeinen Formel (IX) sind Umsetzungsprodukte von Aminosilanen der allgemeinen Formel (X), in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R¹³: für Wasserstoff steht,
mit

Fumarsäurediestern und/oder Maleinsäurediestern der allgemeinen Formel (XI), in welcher die Reste R¹⁴ und R¹⁵ für gleiche oder verschiedene Reste stehen und einen Methyl-, Ethyl-, n-Butyl- oder 2-Ethylhexylrest bedeuten.

Besonders bevorzugte Aminosilane der allgemeinen Formel (IX) sind Umsetzungsprodukte von 3-Aminopropyltrimethoxysilan und/oder 3-Aminopropyltriethoxysilan mit Maleinsäurediethylester.

Geeignete Aminosilane E) sind beispielsweise auch solche der allgemeinen Formel (XII) 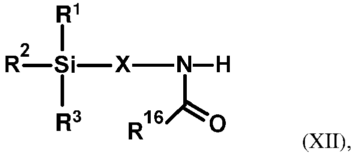 in welcher R¹, R² und R³ die für Formel (II) genannte Bedeutung haben,
- X: für einen linearen oder verzweigten organischen Rest mit mindestens 2 Kohlenstoffatomen und
- R¹⁶: für einen gesättigten linearen oder verzweigten, aliphatischen oder cycloaliphatischen organischen Rest mit 1 bis 8 Kohlenstoffatomen steht.

Bei diesen Aminosilanen der allgemeinen Formel (XII) handelt es sich um die bekannten silanfunktionellen Alkylamide, wie sie sich beispielsweise nach den in US 4 788 310 und US 4 826 915 offenbarten Verfahren durch Umsetzung von primäre Aminogruppen tragenden Aminosilanen mit Alkylcarbonsäurealkylestern unter Alkoholabspaltung erhalten lassen.

Geeignete Ausgangsverbindungen zu Herstellung von Aminosilanen der allgemeinen Formel (XII) sind daher grundsätzlich beliebige Aminosilane der allgemeinen Formel (XIII) 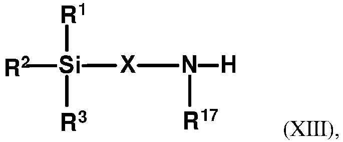 in welcher R¹, R², R³ und X die für Formel (II) genannte Bedeutung haben und R¹⁷ für Wasserstoff steht.

Diese werden mit Alkylcarbonsäurealkylestern der allgemeinen Formel (XIV) 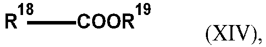 umgesetzt, in welcher
- R¹⁸: für Wasserstoff oder einen gesättigten linearen oder verzweigten, aliphatischen oder cycloaliphatischen organischen Rest mit 1 bis 8 Kohlenstoffatomen und
- R¹⁹: für einen gesättigten aliphatischen organischen Rest mit 1 bis 4 Kohlenstoffatomen steht.

Bevorzugte Aminosilane der allgemeinen Formel (XII) sind Umsetzungsprodukte von Aminosilanen der allgemeinen Formel (XIII), in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R¹⁷: für Wasserstoff steht,
mit

Ameisensäurealkylestern der allgemeinen Formel (XIV), in welcher
- R¹⁸: für Wasserstoff und
- R¹⁹: für einen gesättigten aliphatischen organischen Rest mit 1 bis 4 Kohlenstoffatomen steht.

Besonders bevorzugte Aminosilane E) der allgemeinen Formel (XII) sind Umsetzungsprodukte von 3-Aminopropyltrimethoxysilan und/oder 3-Aminopropyltriethoxysilan mit Methylformiat und/oder Ethylformiat.

Zur Durchführung des erfindungsgemäßen Verfahrens wird die Polyolkomponente A) mit der IPDI enthaltenden Diisocyanatkomponente B) und dem Isocyanatosilan C) umgesetzt.

Dazu wird die Polyolkomponente A), gegebenenfalls unter einem Inertgas wie beispielsweise Stickstoff, bei einer Temperatur zwischen 20 und 100°C vorgelegt. Anschließend können die IPDI enthaltende Diisocyanatkomponente B) und das Isocyanatosilan C) entweder als Mischung oder gleichzeitig parallel (Verfahren A; siehe unten) oder nacheinander in der oben angegebenen Reihenfolge (Verfahren B; siehe unten) oder zumächst nur die IPDI enthaltende Diisocyanatkomponente B) (Verfahren C; siehe unten) in der oben angegebenen Menge zugegeben werden und die Temperatur der Reaktionsmischung für die Urethanisierungsreaktion gegebenenfalls durch eine geeignete Maßnahme (Heizen oder Kühlen) auf 30°C bis 120°C, vorzugsweise von 50°C bis 100°C eingestellt.

Der mitzuverwendende Katalysator D) kann dabei in der oben angegebenen Menge einem oder mehreren der Reaktionspartner, der Polyolkomponente A), der IPDI enthaltenden Diisocyanatkomponente B) und/oder dem Isocyanatosilan C) bzw. einem Gemisch der Komponenten B) und C) bereits vor Beginn der eigentlichen Umsetzung zugemischt werden. Der Katalysator D) kann aber auch zu jedem beliebigen Zeitpunkt während des Zudosierens oder auch im Anschluss daran dem Reaktionsgemisch zugegeben werden.

Der Verlauf der Urethanisierungsreaktion kann durch z. B. titrimetrische Bestimmung des NCO-Gehaltes verfolgt werden. Nach Erreichen des angestrebten NCO-Gehaltes, bei Verfahren A) und B) vorzugsweise nach vollständiger Umsetzung der Hydroxylgruppen der Polyolkomponente A), wird das Aminosilan E) in der oben angegebenen Menge zum Reaktionsgemisch zudosiert. Die Umsetzung der freien Isocyanatgruppen zu Harnstoffgruppen erfolgt üblicherweise ebenfalls im oben genannten Temperaturbereich von 30°C bis 120°C, vorzugsweise von 50°C bis 100°C.

Nach Beendigung der Isocyanat/Amin-Reaktion, d.h. wenn keine freien NCO-Gruppen mehr in der Reaktionsmischung nachweisbar sind, liegen im Falle von Verfahren A und B bereits erfindungsgemäße gemischte silanterminierte Polymere vor. Bei Verfahren C schließt sich dagegen als weiterer Reaktionsschritt die Urethanisierung der noch vorhandene freien Hydroxylgruppen mit einem Isocyanatosilan C) an. Hierzu wird das Isocyanatosilan C) in der oben angegebenen Menge zugegeben und die Reaktionstemperatur auf einen Wert innerhalb des oben für die Urethanisierungsreaktion angegebenen Temperaturbereich eingestellt.

Unabhängig von der Art und Menge der eingesetzten Ausgangsverbindungen A) bis E) und der gewählten Ausführungsform des erfindungsgemäßen Verfahrens erhält man als Verfahrensprodukte klare, praktisch farblose gemischte silanterminierte Polymere, die in der Regel Farbzahlen von unter 120 APHA, vorzugsweise von unter 80 APHA, besonders bevorzugt von unter 60 APHA aufweisen und sich durch eine niedrige Viskosität und eine verbesserte Lagerstabilität auszeichnen.

Zur Herstellung der erfindungsgemäßen gemischten silanterminierten Polymere können die Hydroxylgruppen der Polyolkomponente A) gleichzeitig mit der Isophorondiisocyanat (IPDI) enthaltenden Diisocyanatkomponente B) und mindestens einem Isocyanatosilan C) in Gegenwart eines Katalysators D) umgesetzt werden. In einem zweiten Reaktionsschritt, vorzugsweise nach vollständiger Urethanisierung, werden anschließend die freien NCO-Gruppen des Reaktionsprodukts mit einem Aminosilan E) abreagiert. (Dieses Verfahren wird im Rahmen der Erfindung "Verfahren A" genannt).

Alternativ kann zunächst auch nur das Isocyanatosilan C) mit einem Teil der Hydroxylgruppen der Polyolkomponente A) umgesetzt werden. In einem zweiten Schritt werden dann die noch freien Hydroxylgruppen des Polymers mit der IPDI enthaltenden Diisocyanatkomponente B) umgesetzt. Der Katalysator D) wird dabei in der Regel bereits von Beginn an dem Reaktionsgemisch zugesetzt, spätestens aber vor Zugabe der IPDI enthaltenden Diisocyanatkomponente B). Anschließend, vorzugsweise nach vollständiger Urethanisierung, wird ein Aminosilan E) in einer solchen Menge zugegeben und mit den freien NCO-Gruppen des erhaltenen Prepolymers umgesetzt, bis keine freien NCO-Gruppen mehr in der Reaktionsmischung nachweisbar sind. (Dieses Verfahren wird im Rahmen der Erfindung "Verfahren B" genannt).

In einer weiteren Ausführungsform des erfindungsgemäßen Verfahrens wird zunächst ein Teil der Hydroxylgruppen der Polyolkomponente A) mit der IPDI enthaltenden Diisocyanatkomponente B) umgesetzt. Nach Erreichen des angestrebten NCO-Gehaltes, vorzugsweise wenn mindestens 40 % der NCO-Gruppen abreagiert haben, wird in einem zweiten Schritt das Aminosilan in einer solche Menge zugegeben und mit den freien NCO-Gruppen des im ersten Schritt erhaltenen OH- und NCO-funktionellen Prepolymers umgesetzt, bis keine freien NCO-Gruppen mehr in der Reaktionsmischung nachweisbar sind. Die noch freien Hydroxylgruppen des Reaktionsproduktes werden abschließend dann mit dem Isocyanatosilan C) umgesetzt. (Dieses Verfahren wird im Rahmen der Erfindung "Verfahren C" genannt).

Bevorzugt wird beim erfindungsgemäßen Verfahren die Menge an Aminosilan E) so gewählt, dass als Verfahrensprodukt ein isocyanatgruppenfreies Produkt entsteht. Dazu wird die Menge an Aminosilan E) im Allgemeinen so gewählt, dass auf jede Isocyanatgruppe der in Verfahren A und Verfahren B als Zwischenstufe erhaltenen Isocyanatprepolymere sowie der in Verfahren C als Zwischenstufe anfallenden OH- und NCO-funktionellen Prepolymere von 0,9 bis 1,2, vorzugsweise von 0,95 bis 1,2, besonders bevorzugt von 0,95 bis 1,05, ganz besonders bevorzugt von 1,0 bis 1,05 Aminogruppen entfallen.

Bei den vorstehend näher beschriebenen möglichen Ausführungsformen des erfindungsgemäßen Verfahrens kommen Aminosilane E) zum Einsatz. Bei den als Verfahren A und Verfahren B bezeichneten Ausführungsformen werden die NCO-Gruppen der als Zwischenstufe erhaltenen Isocyanatprepolymere, bei Verfahren C die NCO-Gruppen des als Zwischenstufe anfallenden OH- und NCO-funktionellen Prepolymers jeweils mit einer solchen Menge an Aminosilanen E) umgesetzt, bis keine freien NCO-Gruppen mehr in der Reaktionsmischung nachweisbar sind.

Die mit dem erfindungsgemäßen Verfahren hergestellten gemischten silanterminierten Polymere eignen sich hervorragend zur Verwendung in sämtlichen bekannten Anwendungen silanterminierter Polymere, beispielsweise als Bindemittel für Lack-, Dichtstoff- oder Klebstoffrohstoffe. Sie eignen sich in besonderer Weise als feuchtigkeitshärtende Klebstoffe mit ausgezeichneter Langzeitstabilität und guter Verarbeitbarkeit. Aufgrund ihrer geringen Viskosität machen sie den Zusatz von Weichmachern überflüssig. Die silanterminierten Polymere können insbesondere als Klebstoffe auf porösen Substraten eingesetzt werden.

### Beispiele

Alle Prozentangaben, ebenso wie alle ppm-Angaben beziehen sich, soweit nichts Anderslautendes vermerkt, auf das Gesamtgewicht der Reaktionsmischung.

Die Bestimmung der NCO-Gehalte erfolgte titrimetrisch nach DIN EN ISO 11909.

OH-Zahlen wurden titrimetrisch nach DIN 53240 T.2 bestimmt.

Sämtliche Viskositätsmessungen erfolgten mit einem Physica MCR 51 Rheometer der Fa. Anton Paar Germany GmbH (D) nach DIN EN ISO 3219.

Die Messung der Hazen-Farbzahl erfolgte spektrofotometrisch nach DIN EN ISO 6271-2:2004 mit einem LICO 400-Spektrofotometer der Fa. Lange, DE.

Bei den angegebenen Molekulargewichten handelt sich jeweils um zahlenmittlere Molekulargewichte (Mn), die sich durch Gelpermeationschromatographie bestimmen lassen.

Für die praktische Durchführung der nachfolgenden Beispiele ist zu beachten, dass die Gehalte der eingesetzten Substanzen an den für die jeweilige Reaktion maßgeblichen Gruppen (z.B. Amingehalt des Aminosilans) durch spezifische Bestimmungsmethoden (z.B. Titration) bestimmt wurden und die tatsächlich eingesetzten Mengen auf Gehalte von jeweils 100 % kalkuliert wurden.

### Synthese gemischt silanterminierten Polymere

### Verfahren A (auch Vergleichsbeispiel)

In einem 2 L-Sulfierbecher mit Deckel, Rührer, Thermometer und Stickstoffdurchfluss wurden 1369,3 g (0,16 mol) eines Propylenglykols der OH-Zahl 13,2 (Acclaim^{®} Polyol 8200 N der Covestro Deutschland AG; Leverkusen DE) mit 35,8 g (0,16 mol) Isophorondiisocyanat und 34,2 g (0,16 mol) 3-Isocyanatopropyltrimethoxysilan (Geniosil^{®} GF 40 der Wacker Chemie AG; München DE) bei 60 °C unter Zugabe von 40 ppm (60 mg) Dibutylzinndilaurat bis zum Erreichen des theoretischen NCO-Gehalts von 0,47 % prepolymerisiert. Anschließend wurden 56.2 g (0,16 mol) N-(3-Trimethoxysilylpropyl)asparaginsäure-diethylester (hergestellt gemäß EP-A 596 360, Bsp. 5) zügig zugetropft und gerührt, bis im IR Spektrum keine Isocyanatbande mehr zu sehen war. Das erhaltene Alkoxysilyl-Endgruppen aufweisende Polyurethanprepolymer hatte eine Viskosität von 12.900 mPas und eine Farbzahl von 16 APHA.

### Verfahren B (auch Vergleichsbeispiel)

In einem 2 L-Sulfierbecher mit Deckel, Rührer, Thermometer und Stickstoffdurchfluss wurden 1369,3 g (0,16 mol) eines Propylenglykols der OH-Zahl 13,2 (Acclaim^{®} Polyol 8200 N der Covestro Deutschland AG; Leverkusen DE) mit 34,2 g (0,16 mol) 3-Isocyanatopropyltrimethoxysilan (Geniosil^{®} GF 40 der Wacker Chemie AG; München DE) bei 60 °C unter Zugabe von 40 ppm (60 mg) Dibutylzinndilaurat gerührt, bis im IR Spektrum keine Isocyanatbande mehr zu sehen war. Anschließend wurden zügig 35,8 g (0,16 mol) Isophorondiisocyanat zugetropft und bis zum Erreichen des theoretischen NCO-Gehalts von 0,47 % prepolymerisiert. Nach Zugabe von 56,2 g (0,16 mol) N-(3- Trimethoxysilylpropyl)asparaginsäure-diethylester (hergestellt gemäß EP-A 596 360, Bsp. 5) wurde die Mischung gerührt, bis im IR Spektrum keine Isocyanatbande mehr zu sehen war. Das erhaltene Alkoxysilyl-Endgruppen aufweisende Polyurethanprepolymer hatte eine Viskosität von 13.600 mPas und eine Farbzahl von 18 APHA.

### Verfahren C (auch Vergleichsbeispiel)

In einem 2 L-Sulfierbecher mit Deckel, Rührer, Thermometer und Stickstoffdurchfluss wurden 1369,3 g (0,16 mol) eines Propylenglykols der OH-Zahl 13,2 (Acclaim^{®} Polyol 8200 N der Covestro Deutschland AG; Leverkusen DE) mit 35,8 g (0,16 mol) Isophorondiisocyanat bei 60 °C unter Zugabe von 40 ppm (60 mg) Dibutylzinndilaurat bis zum Erreichen des theoretischen NCO-Gehalts von 0,47 % prepolymerisiert. Nach Zugabe von 56,2 g (0,16 mol) N-(3-Trimethoxysilylpropyl)asparaginsäure-diethylester (hergestellt gemäß EP-A 596 360, Bsp. 5) wurde die Mischung gerührt, bis im IR Spektrum keine Isocyanatbande mehr zu sehen war. Danach wurden zügig 34,2 g (0,16 mol) 3-Isocyanatopropyltrimethoxysilan (Geniosil^{®} GF 40 der Wacker Chemie AG; München DE) zugetropft und erneut gerührt, bis im IR Spektrum keine Isocyanatbande mehr zu sehen war. Das erhaltene Alkoxysilyl-Endgruppen aufweisende Polyurethanprepolymer hatte eine Viskosität von 13.000 mPas und eine Farbzahl von 20 APHA.

Diese Beispiele zeigen, dass unter Verwendung des aus dem Stand der Technik bekannten zinnhaltigen Katalysators, unabhängig vom gewählten Verfahren, gemischte silanterminierte Polymere mit geringer Viskosität erhalten werden können. Die Viskosität der dabei erhaltenen gemischt silanterminierten Polymere wird unter anderem auch durch die Wahl des Katalysators beeinflusst.

Die Synthese der gemischt silanterminierten Polymere unter Verwendung eines organo-zinnfreien Katalysators D) erfolgt dabei nach den im Vorhergehenden beschriebenen Verfahrensweisen, wobei der nicht erfindungsgemäße DBTL-Katalysator entsprechend ausgetauscht wurde. Man erhielt die folgenden Viskositäten der erhaltenen Polymere:

| **Nr.** | **Katalysator (Katalysatormenge)** | **Verfahren** | **Viskosität** |
|---|---|---|---|
| VG 1 | Valikat^{®} Bi 2810 (Bismut(III)neodecanoat) (160 ppm) | Verfahren A | 30.900 mPas |
| VG2 | Valikat^{®} Bi 2810 (Bismut(III)neodecanoat) (160 ppm) | Verfahren B | 26.800 mPas |
| VG 3 | Valikat^{®} Bi 2810 (Bismut(III)neodecanoat) (160 ppm) | Verfahren C | 24.600 mPas |
| VG 4 | K-Kat 348^{®} (Bismuth(III) 2-ethylhexanoat) (160 ppm) | Verfahren A | 29.700 mPas |
| VG 5 | K-Kat 348^{®} (Bismuth(III) 2-ethylhexanoat) (160 ppm) | Verfahren B | 29.800 mPas |
| VG 6 | K-Kat 348^{®} (Bismuth(III) 2-ethylhexanoat) (160 ppm) | Verfahren C | 30.00 mPas |
| EF 1 | Zink(II) 2-ethylhexanoat (160 ppm) | Verfahren A | 17.800 mPas |
| EF2 | Zink(II) 2-ethylhexanoat (160 ppm) | Verfahren B | 20.300 mPas |
| EF 3 | Zink(II) 2-ethylhexanoat (160 ppm) | Verfahren C | 20.400 mPas |
| EF4 | Ytterbium(III) acetylacetonat (120 ppm) | Verfahren C | 12.600 mPas |
| EF5 | Gallium(III) acetylacetonat (160 ppm) | Verfahren A | 17.100 mPas |
| EF6 | Gallium(III) acetylacetonat (160 ppm) | Verfahren B | 16.100 mPas |
| EF7 | Gallium(III) acetylacetonat (160 ppm) | Verfahren C | 21.200 mPas |
| VG = Vergleichsbeispiel | | | |
| EF = Erfindungsgemäß | | | |

## Patentansprüche

1. Verfahren zur Herstellung eines gemischten silanterminierten Polymers durch Umsetzung einer Polyolkomponente A) mit einer Diisocyanatkomponente B) umfassend 1-Isocyanato-3,3,5-trimethyl-5-isocyanatomethylcyclohexan (Isophorondiisocyanat), mindestens einem Isocyanatosilan C) und einem Aminosilan E), bei dem die Urethanisierungsreaktion in Gegenwart mindestens eines Katalysators D), der frei von organisch gebundenem Zinn ist, durchgeführt wird,
wobei das Verfahren so geführt wird, dass
zunächst ein Teil der Hydroxylgruppen der Polyolkomponente A) mit der Diisocyanatkomponente B) umgesetzt wird und nach Erreichen eines angestrebten NCO-Gehaltes, vorzugsweise wenn mindestens 40 % der NCO-Gruppen abreagiert haben, in einem zweiten Schritt das Aminosilan in einer solche Menge zugegeben und mit den freien NCO-Gruppen des im ersten Schritt erhaltenen OH- und NCO-funktionellen Prepolymers umgesetzt wird, bis keine freien NCO-Gruppen mehr in der Reaktionsmischung nachweisbar sind und die noch freien Hydroxylgruppen des Reaktionsproduktes abschließend dann mit dem Isocyanatosilan C) umgesetzt werden,
**dadurch gekennzeichnet, dass**
der Katalysator D) ausgewählt ist aus einer Gruppe von Verbindungen umfassend:
- eine organometallische Verbindung von Magnesium, Zink, Gallium, Scandium, Lanthan, Cer, Praseodym, Neodym, Promethium, Samarium, Europium, Gadolinium, Terbium, Dysprosium, Holmium, Erbium, Thulium, Ytterbium, Yttrium oder Lutetium, wobei unter einer organometallischen Verbindung eine Verbindung verstanden wird, welche zumindest einen über ein Sauerstoffatom an vorstehend genannte Metalle (Me) gebundenen Liganden aufweist und die Liganden ausgewählt sind aus der Gruppe bestehend aus Alkoxygruppe, Sulfonatgruppe, Carboxylatgruppe, Dialkylphosphatgruppe, Dialkylpyrophosphatgruppe und β-Diketonatgruppe, wobei alle Liganden identisch oder verschieden voneinander sein können.
- oder Mischungen der oben genannten Verbindungen.

2. Verfahren gemäß Anspruch 1,
**dadurch gekennzeichnet, dass**
der Katalysator D) ausgewählt ist aus einer Gruppe von Verbindungen umfassend:
- eine beta-Diketonat-Verbindung von Magnesium, Zink, Gallium, Scandium, Lanthan, Cer, Praseodym, Neodym, Promethium, Samarium, Europium, Gadolinium, Terbium, Dysprosium, Holmium, Erbium, Thulium, Ytterbium, Yttrium oder Lutetium,
- ein Zinkcarboxylat
- oder Mischungen der oben genannten Verbindungen.

3. Verfahren zur Herstellung eines gemischten silanterminierten Polymers durch Umsetzung einer Polyolkomponente A) mit einer Diisocyanatkomponente B) umfassend 1-Isocyanato-3,3,5-trimethyl-5-isocyanatomethylcyclohexan (Isophorondiisocyanat), mindestens einem Isocyanatosilan C) und einem Aminosilan E), bei dem die Urethanisierungsreaktion in Gegenwart mindestens eines Katalysators D), der frei von organisch gebundenem Zinn ist, durchgeführt wird,
wobei das Verfahren so geführt wird, dass
i) die Hydroxylgruppen der Polyolkomponente A) gleichzeitig mit der Diisocyanatkomponente B) und mindestens einem Isocyanatosilan C) in Gegenwart eines Katalysators D) umgesetzt werden und in einem zweiten Reaktionsschritt, vorzugsweise nach vollständiger Urethanisierung, anschließend die freien NCO-Gruppen des Reaktionsprodukts mit einem Aminosilan E) abreagiert,
oder
ii) das Isocyanatosilan C) mit einem Teil der Hydroxylgruppen der Polyolkomponente A) umgesetzt wird und in einem zweiten Schritt dann die noch freien Hydroxylgruppen des Polymers mit der Diisocyanatkomponente B) umgesetzt werden sowie anschließend, vorzugsweise nach vollständiger Urethanisierung, ein Aminosilan E) in einer solchen Menge zugegeben und mit den freien NCO-Gruppen des erhaltenen Prepolymers umgesetzt wird, bis keine freien NCO-Gruppen mehr in der Reaktionsmischung nachweisbar sind,
**dadurch gekennzeichnet, dass**
der Katalysator D) ausgewählt ist aus einer Gruppe von Verbindungen umfassend:
- eine organometallische Verbindung von Magnesium, Zink, Gallium, Scandium, Lanthan, Cer, Praseodym, Neodym, Promethium, Samarium, Europium, Gadolinium, Terbium, Dysprosium, Holmium, Erbium, Thulium, Ytterbium, Yttrium oder Lutetium, wobei unter einer organometallischen Verbindung eine Verbindung verstanden wird, welche zumindest einen über ein Sauerstoffatom an vorstehend genannte Metalle (Me) gebundenen Liganden aufweist und die Liganden ausgewählt sind aus der Gruppe bestehend aus Alkoxygruppe, Sulfonatgruppe, Carboxylatgruppe, Dialkylphosphatgruppe, Dialkylpyrophosphatgruppe und β-Diketonatgruppe, wobei alle Liganden identisch oder verschieden voneinander sein können,
- oder Mischungen der oben genannten Verbindungen,
wobei die alleinige Verwendung von Ytterbium (III)-Acetylacetonat als Katalysator D) ausgenommen ist.

4. Verfahren gemäß Anspruch 3, wobei der Katalysator D) ausgewählt ist aus einer Gruppe von Verbindungen umfassend:
- eine beta-Diketonat-Verbindung von Magnesium, Zink, Gallium, Scandium, Lanthan, Cer, Praseodym, Neodym, Promethium, Samarium, Europium, Gadolinium, Terbium, Dysprosium, Holmium, Erbium, Thulium, Ytterbium, Yttrium oder Lutetium,
- ein Zinkcarboxylat
- oder Mischungen der oben genannten Verbindungen,
wobei die alleinige Verwendung von Ytterbium (III)-Acetylacetonat als Katalysator D) ausgenommen ist.

5. Verfahren nach einem der vorhergehenden Ansprüche, wobei die Polyolkomponente A) ein Polyetherpolyol mit einem zahlenmittleren Molekulargewicht im Bereich von 3000 bis 24000 g/mol ist.

6. Verfahren nach einem der vorhergehenden Ansprüche, wobei die Polyolkomponente A) ein Polyetherpolyol auf Basis von Polypropylenoxid ist.

7. Verfahren nach einem der vorhergehenden Ansprüche, wobei die Isocyanatkomponente B) ausschließlich Isophorondiisocyanat enthält.

8. Verfahren nach einem der vorhergehenden Ansprüche, wobei das Isocyanatosilan C) eine Verbindung der Formel (II) ist 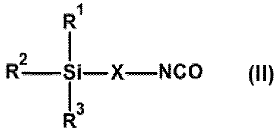 in welcher
R¹, R² und R³ unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist, und
X für einen linearen oder verzweigten organischen Rest mit bis zu 6, vorzugsweise 1 bis 4 Kohlenstoffatomen, besonders bevorzugt für einen Propylenrest (-CH₂-CH₂-CH₂-) steht.

9. Verfahren nach einem der vorhergehenden Ansprüche, wobei als Isocyanatosilan C) 3-Isocyanatopropyltrimethoxysilan eingesetzt wird.

10. Verfahren nach einem der vorhergehenden Ansprüche, wobei das Aminosilan E) eine Verbindung der Formel (VIII) ist, 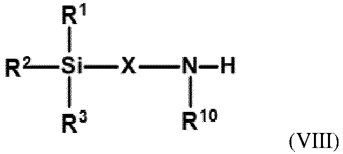 in welcher R¹, R², R³ und X die in Anspruch 8 genannte Bedeutung haben
und
R¹⁰ für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 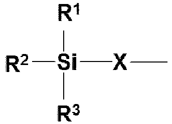
steht, in welchem R¹, R², R³ und X die vorstehend angegebene Bedeutung haben.

11. Verfahren nach einem der vorhergehenden Ansprüche, wobei das Aminosilan E) eine Verbindung der Formel (IX) ist 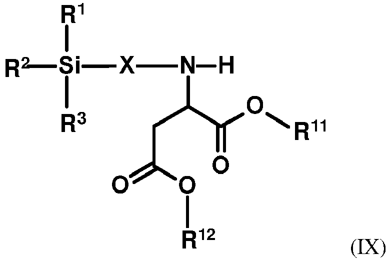 in welcher
R¹, R² und R³ die in Anspruch 8 genannte Bedeutung haben
X für einen linearen oder verzweigten organischen Rest mit mindestens 2 Kohlenstoffatomen steht und
R¹¹ und R¹² unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

12. Verfahren nach einem der vorhergehenden Ansprüche, wobei die Menge an Aminosilan E) so gewählt ist, dass auf jede Isocyanatgruppe des in Verfahrensschritt a) entstandenen isocyanat- und silanfunktionellen Polymers 0,9 bis 1,2, vorzugsweise 0,95 bis 1,2, besonders bevorzugt 0,95 bis 1,05 Aminogruppen entfallen.

13. Verfahren nach einem der vorhergehenden Ansprüche, wobei die Stoffmenge des eingesetzten Isocyanatosilans C) im Bereich von 1 bis 50 mol-%, vorzugsweise im Bereich von 5 bis 28 mol-%, besonders bevorzugt im Bereich von 10 bis 28 mol-%, ganz besonders bevorzugt im Bereich von 10 bis 25 mol-% und die Stoffmenge des eingesetzten Diisocyanats B) dementsprechend im Bereich von 50 bis 99 mol-%, vorzugsweise im Bereich von 72 bis 95 mol-%, besonders bevorzugt im Bereich von 72 bis 90 mol-%, ganz besonders bevorzugt im Bereich von 75 bis 90 mol-% bezogen auf die Anzahl der Hydroxylgruppen des Polyols A) liegt.

14. Verwendung der nach einem der vorhergehenden Ansprüche hergestellten silanterminierten Polymere als Bindemittel in Beschichtungs-, Dichtungs- und Klebemitteln, insbesondere im Bereich des Bauwesens und in der Automobilindustrie.

## Claims

1. Process for preparing a mixed silane-terminated polymer by reacting a polyol component A) with a diisocyanate component B) comprising 1-isocyanato-3,3,5-trimethyl-5-isocyanatomethylcyclohexane (isophorone diisocyanate), with at least one isocyanatosilane C) and with an aminosilane E), in which the urethanization reaction is carried out in the presence of at least one catalyst D) which is free of organically bonded tin,
wherein the process is conducted so that first, some of the hydroxyl groups of the polyol component A) are reacted with the diisocyanate component B) and, after reaching a desired NCO content, preferably when at least 40% of the NCO groups have reacted, in a second step the aminosilane is added in such an amount that, and reacted with the free NCO groups of the OH- and NCO-functional prepolymer obtained in the first step until, no free NCO groups are detectable in the reaction mixture any longer, and the still-free hydroxyl groups of the reaction product are then finally reacted with the isocyanatosilane C),
**characterized in that**
the catalyst D) is selected from a group of compounds comprising:
- an organometallic compound of magnesium, zinc, gallium, scandium, lanthanum, cerium, praseodymium, neodymium, promethium, samarium, europium, gadolinium, terbium, dysprosium, holmium, erbium, thulium, ytterbium, yttrium or lutetium, an organometallic compound being understood to be a compound which has at least one ligand bonded to the abovementioned metals (Me) via an oxygen atom, and the ligands being selected from the group consisting of alkoxy group, sulfonate group, carboxylate group, dialkylphosphate group, dialkylpyrophosphate group and β-diketonate group, where all ligands may be identical or different from each other,
- or mixtures of the abovementioned compounds.

2. Process according to Claim 1,
**characterized in that**
the catalyst D) is selected from a group of compounds comprising:
- a beta-diketonate compound of magnesium, zinc, gallium, scandium, lanthanum, cerium, praseodymium, neodymium, promethium, samarium, europium, gadolinium, terbium, dysprosium, holmium, erbium, thulium, ytterbium, yttrium or lutetium,
- a zinc carboxylate,
- or mixtures of the abovementioned compounds.

3. Process for preparing a mixed silane-terminated polymer by reacting a polyol component A) with a diisocyanate component B) comprising 1-isocyanato-3,3,5-trimethyl-5-isocyanatomethylcyclohexane (isophorone diisocyanate), with at least one isocyanatosilane C) and with an aminosilane E), in which the urethanization reaction is carried out in the presence of at least one catalyst D) which is free of organically bonded tin,
wherein the process is conducted so that
i) the hydroxyl groups of the polyol component A) are reacted simultaneously with the diisocyanate component B) and at least one isocyanatosilane C) in the presence of a catalyst D) and in a second reaction step, preferably after complete urethanization, the free NCO groups of the reaction product are then reacted with an aminosilane E),
or
ii) the isocyanatosilane C) is reacted with some of the hydroxyl groups of the polyol component A) and in a second step the still-free hydroxyl groups of the polymer are then reacted with the diisocyanate component B) and then, preferably after complete urethanization, an aminosilane E) is added in such an amount that, and reacted with the free NCO groups of the prepolymer obtained until, no free NCO groups are detectable in the reaction mixture any longer,
**characterized in that**
the catalyst D) is selected from a group of compounds comprising:
- an organometallic compound of magnesium, zinc, gallium, scandium, lanthanum, cerium, praseodymium, neodymium, promethium, samarium, europium, gadolinium, terbium, dysprosium, holmium, erbium, thulium, ytterbium, yttrium or lutetium, an organometallic compound being understood to be a compound which has at least one ligand bonded to the abovementioned metals (Me) via an oxygen atom, and the ligands being selected from the group consisting of alkoxy group, sulfonate group, carboxylate group, dialkylphosphate group, dialkylpyrophosphate group and β-diketonate group, where all ligands may be identical or different from each other,
- or mixtures of the abovementioned compounds, wherein the sole use of ytterbium(III) acetylacetonate as catalyst D) is excluded.

4. Process according to Claim 3, wherein the catalyst D) is selected from a group of compounds comprising:
- a beta-diketonate compound of magnesium, zinc, gallium, scandium, lanthanum, cerium, praseodymium, neodymium, promethium, samarium, europium, gadolinium, terbium, dysprosium, holmium, erbium, thulium, ytterbium, yttrium or lutetium,
- a zinc carboxylate,
- or mixtures of the abovementioned compounds, wherein the sole use of ytterbium(III) acetylacetonate as catalyst D) is excluded.

5. Process according to any of the preceding claims, wherein the polyol component A) is a polyether polyol having a number-average molecular weight in the range from 3000 to 24 000 g/mol.

6. Process according to any of the preceding claims, wherein the polyol component A) is a polyether polyol based on polypropylene oxide.

7. Process according to any of the preceding claims, wherein the isocyanate component B) contains exclusively isophorone diisocyanate.

8. Process according to any of the preceding claims, wherein the isocyanatosilane C) is a compound of the formula (II) 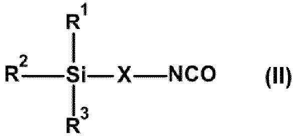 in which
R¹, R² and R³ independently of one another are identical or different saturated or unsaturated, linear or branched, aliphatic or cycloaliphatic or optionally substituted aromatic or araliphatic radicals which have up to 18 carbon atoms and may optionally contain up to 3 heteroatoms from the group of oxygen, sulfur, nitrogen, preferably in each case alkyl radicals which have up to 6 carbon atoms and/or alkoxy radicals which have up to 6 carbon atoms and may contain up to 3 oxygen atoms, particularly preferably in each case methyl, methoxy and/or ethoxy, with the proviso that at least one of the radicals R¹, R² and R³ is joined to the silicon atom via an oxygen atom, and
X is a linear or branched organic radical having up to 6, preferably 1 to 4, carbon atoms, particularly preferably a propylene radical (-CH₂-CH₂-CH₂-) .

9. Process according to any of the preceding claims, wherein the isocyanatosilane C) used is 3-isocyanatopropyltrimethoxysilane.

10. Process according to any of the preceding claims, wherein the aminosilane E) is a compound of the formula (VIII) 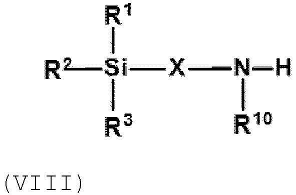 in which R¹, R², R³ and X have the definition given in Claim 8
and
R¹⁰ is hydrogen, a saturated or unsaturated, linear or branched, aliphatic or cycloaliphatic or an optionally substituted aromatic or araliphatic radical having up to 18 carbon atoms or a radical of the formula 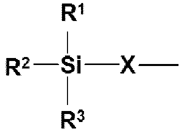
in which R¹, R², R³ and X have the definition given above.

11. Process according to any of the preceding claims, wherein the aminosilane E) is a compound of the formula (IX) 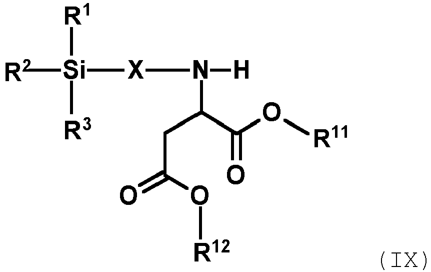 in which
R¹, R² and R³ have the definition given in Claim 8
X is a linear or branched organic radical having at least 2 carbon atoms and
R¹¹ and R¹² independently of one another are saturated or unsaturated, linear or branched, aliphatic or cycloaliphatic or aromatic organic radicals which have 1 to 18 carbon atoms, are substituted or unsubstituted and/or have heteroatoms in the chain.

12. Process according to any of the preceding claims, wherein the amount of aminosilane E) is chosen such that there are 0.9 to 1.2, preferably 0.95 to 1.2, particularly preferably 0.95 to 1.05 amino groups for each isocyanate group of the isocyanate- and silane-functional polymer formed in process step a) .

13. Process according to any of the preceding claims, wherein the molar amount of the isocyanatosilane C) used is in the range from 1 to 50 mol%, preferably in the range from 5 to 28 mol%, particularly preferably in the range from 10 to 28 mol%, very particularly preferably in the range from 10 to 25 mol%, and the molar amount of the diisocyanate B) used is accordingly in the range from 50 to 99 mol%, preferably in the range from 72 to 95 mol%, particularly preferably in the range from 72 to 90 mol%, very particularly preferably in the range from 75 to 90 mol%, based on the number of hydroxyl groups of polyol A).

14. Use of the silane-terminated polymers prepared according to any of the preceding claims as binders in coating compositions, sealants and adhesives, in particular in the construction sector and in the automobile industry.

## Revendications

1. Procédé pour la préparation d'un polymère mixte terminé par silane par transformation d'un composant polyol A) avec un composant diisocyanate B) comprenant du 1-isocyanato-3,3,5-triméthyl-5-isocyanatométhyl-cyclohexane (diisocyanate d'isophorone), au moins un isocyanatosilane C) et un aminosilane E), dans lequel la réaction d'uréthanisation est réalisée en présence d'au moins un catalyseur D) qui est exempt d'étain lié de manière organique,
le procédé étant mis en œuvre de manière telle que on transforme d'abord une partie des groupes hydroxyle du composant polyol A) avec le composant diisocyanate B) et, après avoir atteint une teneur visée en NCO, de préférence lorsqu'au moins 40% des groupes NCO ont réagi, dans une deuxième étape, on ajoute l'aminosilane en une quantité telle et on le transforme avec les groupes NCO libres du prépolymère à fonctionnalité OH et NCO obtenu dans la première étape de manière telle qu'on ne peut plus mettre en évidence de groupes NCO libres dans le mélange réactionnel et on transforme enfin les groupes hydroxyle encore libres du produit de réaction avec l'isocyanatosilane C),
**caractérisé en ce que**
le catalyseur D) est choisi dans un groupe de composés comprenant :
- un composé organométallique de magnésium, zinc, gallium, scandium, lanthane, cérium, praséodyme, néodyme, prométhium, samarium, europium, gadolinium, terbium, dysprosium, holmium, erbium, thulium, ytterbium, yttrium ou lutétium, où on entend par composé organométallique un composé qui présente au moins un ligand lié par l'intermédiaire d'un atome d'oxygène à des métaux (Me) susmentionnés et les ligands sont choisis dans le groupe constitué par le groupe alcoxy, le groupe sulfonate, le groupe carboxylate, le groupe dialkylphosphate, le groupe dialkylpyrophosphate et le groupe β-dicétonate, tous les ligands pouvant être identiques ou différents les uns des autres,
- ou les mélanges des composés susmentionnés.

2. Procédé selon la revendication 1,
**caractérisé en ce que**
le catalyseur D) est choisi dans un groupe de composés comprenant :
- un composé bêta-dicétonate de magnésium, zinc, gallium, scandium, lanthane, cérium, praséodyme, néodyme, prométhium, samarium, europium, gadolinium, terbium, dysprosium, holmium, erbium, thulium, ytterbium, yttrium ou lutétium,
- un carboxylate de zinc
- ou les mélanges des composés susmentionnés.

3. Procédé pour la préparation d'un polymère mixte terminé par silane par transformation d'un composant polyol A) avec un composant diisocyanate B) comprenant du 1-isocyanato-3,3,5-triméthyl-5-isocyanatométhylcyclohexane (diisocyanate d'isophorone), au moins un isocyanatosilane C) et un aminosilane E), dans lequel la réaction d'uréthanisation est réalisée en présence d'au moins un catalyseur D) qui est exempt d'étain lié de manière organique,
le procédé étant mis en œuvre de manière telle que
i) on transforme les groupes hydroxyle du composant polyol A) simultanément avec le composant diisocyanate B) et au moins un isocyanatosilane C) en présence d'un catalyseur D) et ensuite, dans une deuxième étape de réaction, de préférence après uréthanisation complète, on transforme les groupes NCO libres du produit de réaction avec un aminosilane E) ou
ii) on transforme l'isocyanatosilane C) avec une partie des groupes hydroxyle du composant polyol A) et, dans une deuxième étape, on transforme ensuite les groupes hydroxyle encore libres du polymère avec le composant diisocyanate B), puis on ajoute, de préférence après uréthanisation complète, un aminosilane E) en une quantité telle et on le transforme avec les groupes NCO libres du prépolymère obtenu de manière telle qu'on ne peut plus mettre en évidence de groupes NCO libres dans le mélange réactionnel,
**caractérisé en ce que**
le catalyseur D) est choisi dans un groupe de composés comprenant :
- un composé organométallique de magnésium, zinc, gallium, scandium, lanthane, cérium, praséodyme, néodyme, prométhium, samarium, europium, gadolinium, terbium, dysprosium, holmium, erbium, thulium, ytterbium, yttrium ou lutétium, où on entend par composé organométallique un composé qui présente au moins un ligand lié par l'intermédiaire d'un atome d'oxygène à des métaux (Me) susmentionnés et les ligands sont choisis dans le groupe constitué par le groupe alcoxy, le groupe sulfonate, le groupe carboxylate, le groupe dialkylphosphate, le groupe dialkylpyrophosphate et le groupe β-dicétonate, tous les ligands pouvant être identiques ou différents les uns des autres,
- ou les mélanges des composés susmentionnés, l'utilisation unique d'acétylacétone d'ytterbium (III) comme catalyseur D) étant exclue.

4. Procédé selon la revendication 3, le catalyseur D) étant choisi dans un groupe de composés comprenant :
- un composé bêta-dicétonate de magnésium, zinc, gallium, scandium, lanthane, cérium, praséodyme, néodyme, prométhium, samarium, europium, gadolinium, terbium, dysprosium, holmium, erbium, thulium, ytterbium, yttrium ou lutétium,
- un carboxylate de zinc
- ou les mélanges des composés susmentionnés, l'utilisation unique d'acétylacétone d'ytterbium (III) comme catalyseur D) étant exclue.

5. Procédé selon l'une quelconque des revendications précédentes, le composant polyol A) étant un polyétherpolyol présentant un poids moléculaire moyen en nombre dans la plage de 3000 à 24.000 g/mole.

6. Procédé selon l'une quelconque des revendications précédentes, le composant polyol A) étant un polyétherpolyol à base de poly(oxyde de propylène).

7. Procédé selon l'une quelconque des revendications précédentes, le composant isocyanate B) contenant exclusivement du diisocyanate d'isophorone.

8. Procédé selon l'une quelconque des revendications précédentes, l'isocyanatosilane C) étant un composé de formule (II) 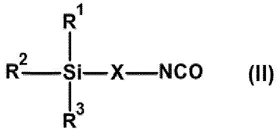 dans laquelle
R¹, R² et R³ signifient, indépendamment les uns des autres, des radicaux saturés ou insaturés, aliphatiques, linéaires ou ramifiés, ou cycloaliphatiques ou aromatiques ou araliphatiques le cas échéant substitués comprenant jusqu'à 18 atomes de carbone, qui peuvent contenir le cas échéant jusqu'à 3 hétéroatomes de la série oxygène, soufre, azote, de préférence à chaque fois des radicaux alkyle comprenant jusqu'à 6 atomes de carbone et/ou des radicaux alcoxy comprenant jusqu'à 6 atomes de carbone, qui peuvent contenir jusqu'à 3 atomes d'oxygène, de manière particulièrement préférée à chaque fois méthyle, méthoxy et/ou éthoxy, à condition qu'au moins un des radicaux R¹, R² et R³ soit lié à l'atome de silicium par l'intermédiaire d'un atome d'oxygène et
X représentant un radical organique linéaire ou ramifié comprenant jusqu'à 6, de préférence 1 à 4 atomes de carbone, de manière particulièrement préférée un radical propylène (-CH₂-CH₂-CH₂-) .

9. Procédé selon l'une quelconque des revendications précédentes, du 3-isocyanatopropyltriméthoxysilane étant utilisé comme isocyanatosilane C).

10. Procédé selon l'une quelconque des revendications précédentes, l'aminosilane E) étant un composé de formule (VIII), 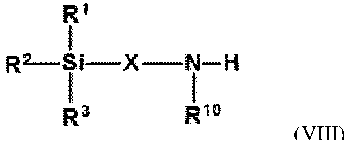 dans laquelle R¹, R², R³ et X présentent la signification mentionnée dans la revendication 8 et
R¹⁰ représente hydrogène, un radical organique saturé ou insaturé, aliphatique, linéaire ou ramifié, ou cycloaliphatique ou aromatique ou araliphatique le cas échéant substitué comprenant jusqu'à 18 atomes de carbone ou un radical de formule 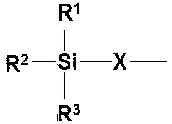
dans laquelle R¹, R², R³ et X ont la signification indiquée ci-dessus.

11. Procédé selon l'une quelconque des revendications précédentes, l'aminosilane E) étant un composé de formule (IX), 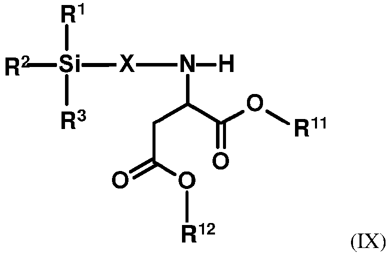 dans laquelle
R¹, R² et R³ ont la signification mentionnée dans la revendication 8,
X représente un radical organique linéaire ou ramifié comprenant au moins 2 atomes de carbone et
R¹¹ et R¹² représentent, indépendamment l'un de l'autre, des radicaux organiques saturés ou insaturés, aliphatiques, linéaires ou ramifiés, ou cycloaliphatiques ou aromatiques, comprenant 1 à 18 atomes de carbone, qui sont substitués ou non substitués et/ou qui présentent des hétéroatomes dans la chaîne.

12. Procédé selon l'une quelconque des revendications précédentes, la quantité d'aminosilane E) étant choisie de manière telle qu'à chaque groupe isocyanate du polymère à fonctionnalité isocyanate et silane formé dans l'étape de procédé a) correspond 0,9 à 1,2, de préférence 0,95 à 1,2, de manière particulièrement préférée 0,95 à 1,05 groupe amino.

13. Procédé selon l'une quelconque des revendications précédentes, la quantité de l'isocyanatosilane C) utilisé se situant dans la plage de 1 à 50% en mole, de préférence dans la plage de 5 à 28% en mole, de manière particulièrement préférée dans la plage de 10 à 28% en mole, de manière tout particulièrement préférée dans la plage de 10 à 25% en mole et la quantité du diisocyanate B) utilisé se situant de manière correspondante dans la plage de 50 à 99% en mole, de préférence dans la plage de 72 à 95% en mole, de manière particulièrement préférée dans la plage de 72 à 90% en mole, de manière tout particulièrement préférée dans la plage de 75 à 90% en mole, par rapport au nombre de groupes hydroxyle du polyol A).

14. Utilisation des polymères terminés par silane préparés selon l'une quelconque des revendications précédentes comme liant dans des agents de revêtement, d'étanchéité et adhésifs, en particulier dans le domaine de la construction et dans l'industrie automobile.
